# EUROPÄISCHE PATENTSCHRIFT

(11) **EP 0 857 923 B1**
(45) Veröffentlichungstag und Bekanntmachung des Hinweises auf die Patenterteilung: **02.01.2003**
(21) Anmeldenummer: 98102193.4
(22) Anmeldetag: 09.02.1998
(51) Int. Cl.: F24H 8/00, F24H 4/02

(54) **Verfahren zum Betrieb eines Heizkessels mit Brennwertnutzung und Heizkessel zur Realisierung des Verfahrens**
Method of operating a condensing boiler and boiler for implementing said method
Procédure de fonctionnement d'une chaudière à condensation et chaudière pour réaliser ladite procédure

(30) Priorität: 10.02.1997 DE 19704888
(43) Veröffentlichungstag der Anmeldung: 12.08.1998
(73) Patentinhaber: BHF Verfahrenstechnik GmbH, 04420 Kulkwitz (DE)
(72) Erfinder: Hebecker, Dietrich, Prof. Dr., 04105 Leipzig (DE); Bittrich, Petra, 06132 Halle (DE); Bergmann, Thomas Dr., 04420 Thronitz (DE)
(74) Vertreter: Kraft, Werner, Dipl.-Ing.(FH)

(56) Entgegenhaltungen:
- DE-A- 3 734 292
- FR-A- 2 563 329

## Beschreibung

Die Erfindung betrifft ein Verfahren zum Betrieb eines Heizkessels mit Brennwertnutzung, weiterhin einen Heizkessel mit apparativen Merkmalen zur Realisierung des Verfahrens. Heizkessel im Sinne der Erfindung sind direktbefeuerte Kessel zur Warmwasser-, Heißwasser- und Dampferzeugung sowie Abgaswärmetauscher bzw. Abhitzekessel, welche Verbrennungskraftanlagen (Verbrennungsmotoren, Gasturbinen oder Brennstoffzellen) nachgeschaltet sind.

Der Stand der Technik auf dem Gebiet der Brennwertkessel ist dadurch gekennzeichnet, daß das Brennerabgas im Heizkessel oder in einer dem Heizkessel nachgeschalteten Wärmetauschereinheit durch den kalten Heizungsrücklauf bis unter die Taupunkttemperatur des Gases abgekühlt wird und damit ein Teil der im Rauchgas enthaltenen Kondensationsenthalpie des Abgases zur Aufheizung des Heizungsrücklaufes genutzt wird.

Der Nachteil der in dieser Weise ausgeführten Brennwerttechnik besteht darin, daß die Brennwertnutzung nur bei niedrigen Rücklauftemperaturen, entweder für Niedertemperaturheizsysteme oder bei geringem Wärmebedarf in konventionellen Heiznetzen erfolgen kann. Darüber hinaus kann nur ein kleiner Anteil des tatsächlich im Rauchgas enthaltenen Wasserdampfes kondensiert und damit genutzt werden, z.B. ist in Gaskesseln bei 50 °C erst etwa die Hälfte des im Rauchgas enthaltenen Wasserdampfes kondensiert.

Bei hohen Rücklauftemperaturen des Heizungsnetzes, die über der Tautemperatur des Abgases von ca. 50-60 °C liegen, arbeiten auch Brennwertkessel wie herkömmliche Heizkessel.

Das vorgeschlagene Verfahren hat gegenüber herkömmlichen Brennwertkesseln den Vorteil, daß ein größerer Anteil der im Rauchgas enthaltenen Kondensationsenthalpie genutzt werden kann und diese Brennwertnutzung auch bei hohen Heizungsrücklauftemperaturen erfolgt.

Bekannt sind weiterhin gasbeheizte Absorptionswärmepumpen, bei denen durch eine zusätzliche Wärmeaufnahme aus der Umgebung der Brennstoffaufwand für eine vorgegebene Heizleistung vermindert wird.

Um die Abwärme der für die Desorberheizung genutzten Brennerabgase besser auszunutzen, sind Lösungen bekannt, bei denen die Abgase bis unterhalb der Taupunkttemperatur ausgekühlt werden und ein Teil der Kondensationswärme genutzt wird.

Für diese Auskühlung existiert eine Vielzahl von technischen Lösungen, durch die die zurückgewonnene Wärme entweder direkt in den Rücklauf des Heizkreislaufes oder in den Arbeitsmittel- oder Lösungskreislauf der Absorptionswärmepumpe eingekoppelt wird.

In gasbeheizten Absorptionswärmepumpen wird entgegen der direkten Wärmeübertragung im Brennwertkessel nahezu die gesamte benötigte Heizwärme im Absorber und Kondensator der Wärmepumpe bereitgestellt. Das führt zu großen Anlagen mit der für Absorptionswärmepumpen charakteristischen großen Wärmeübertragerfläche.

Der vorgeschlagene Brennwertkessel hat gegenüber gasbeheizten Absorptionswärmepumpen mit integrierter Brennwertnutzung den Vorteil, daß der Absorptionsprozeß nur für die Nutzung der Restrauchgaswärme ausgelegt werden muß, während der Hauptteil der Wärme durch direkte Wärmeübertragung im Kessel erzeugt wird.

Das führt zu erheblich verminderten Apparategrößen, wobei im offenen Absorptionskreisprozeß gegenüber der geschlossenen Prozeßführung zusätzlich ein Apparat, der Verdampfer, eingespart wird.

Bekannt ist weiterhin, daß durch den Einsatz offener Absorptionskreisprozesse mit vorzugsweise wäßrigen Lösungen von Säuren und Salzen eine Nutzung der Kondensationsenthalpie des im Rauchgas enthaltenen Wassers auf höherem Temperaturniveau ermöglicht wird. Dabei gehen die bekannten Verfahren von der externen Wärmenutzung eines aus einem Verbrennungsprozeß entstehenden Rauchgases aus.

Die Antriebsenergie des Transformationsprozesses ist durch den Energieinhalt der Verbrennungsabgase beschränkt.

Das Verbesserungspotential, das in einer geänderten Prozeßführung des Verbrennungsprozesses liegt, kann durch ein externes Verfahren nicht genutzt werden. Dadurch wird in den bekannten Verfahren die aus dem Rauchgas auskoppelbare Feuchte durch den Energieinhalt der Rauchgase selbst begrenzt (WP 211256) oder es ist ein zusätzlicher Aufwand an Heizdampf notwendig (DD 280472), um die absorbierte Feuchte wieder zu desorbieren. Das in (DD 280472) beschriebene Verfahren hat darüber hinaus den Nachteil, daß die Lösung zunächst im Sumpf des Absorbers zur Nutzwärmeauskopplung abgekühlt wird und anschließend regenerativ wieder aufgeheizt werden muß.

Beide Verfahren arbeiten mit einem konstanten Lösungsstrom in Absorber und Desorber. Deshalb muß ein Kompromiß zwischen der im Absorber notwendigen hohen Berieselungsdichte und einem für thermodynamische Effektivität anzustrebenden kleinen Lösungsumlauf gefunden werden.

Im französischen Patent FR-A-2563329 ist ein Verfahren beschrieben, bei dem das Nutztemperaturniveau bzw. die Effektivität der Brennwertnutzung durch einen Adsorptions- Desorptions- Kreislauf, der einerseits das Abgas nach dem Kondensationswärmetauscher entfeuchtet und andererseits das Abgas vor dem Kondensationswärmetauscher befeuchtet, erhöht wird.

Gegenüber den bekannten Verfahren hat das vorgeschlagene Verfahren den Vorteil, daß durch die unmittelbare Kopplung von Verbrennungs- und Absorptionskreisprozeß die Austrittstemperatur der Rauchgase aus dem Kessel und der angeschlossene Wärmenutzungsprozeß optimal aufeinander abgestimmt werden, wodurch sich das Wärmenutzungspotential der Absorptionskreisprozesse wesentlich erhöht. Die aus dem Rauchgas auskoppelbare Feuchte ist nicht mehr durch den Energieinhalt der Rauchgase begrenzt. Eine vorteilhafte Aufteilung der Lösungsströme zwischen Absorber und Desorber ermöglicht eine bessere Gestaltung beider Apparate und ermöglicht die Verkleinerung oder Einsparung des regenerativen Wärmeübertragers ohne die thermodynamische Effektivität des Kreisprozesses wesentlich herabzusetzen.

Das Wesen der Erfindung besteht darin, in einem Heizkessel durch Integration eines offenen Sorptionsprozesses Brennwertnutzung bei erhöhter Temperatur zu realisieren.

Im Absorber erfolgt die Entfeuchtung und die Abkühlung des Rauchgases.

Durch die Entfeuchtung des Rauchgases mit Hilfe einer hygroskopischen Lösung sind hierbei bei gleichen Temperaturen merklich höhere Entfeuchtungsgrade erreichbar als bei einfacher Kondensation durch Abkühlung des Rauchgases.

Die Regeneration der Lösung erfolgt im Desorber, welcher durch die Feuerungswärmezufuhr direkt oder indirekt beheizt wird. Im Kondensator wird der zuvor im Absorber vorgewärmte Heizwasserrücklaufstrom durch den im Kondensator kondensierenden Wasserdampf weiter aufgeheizt bevor er in den Kesselwärmeübertrager eintritt. Die Einkopplung der genutzten Latentwärme des Rauchgases (Kondensationswärme) erfolgt somit in diesem Prozeß auf einem höheren Temperaturniveau (z.B. t_{Kond} = 100°C bei p_{Kond} = 1bar) als bei der herkömmlichen Brennwertnutzung durch einfache Rauchgasabkühlung.

Zur nachfolgenden näheren Erläuterung werden Zeichnungen herangezogen, die folgendes darstellen:

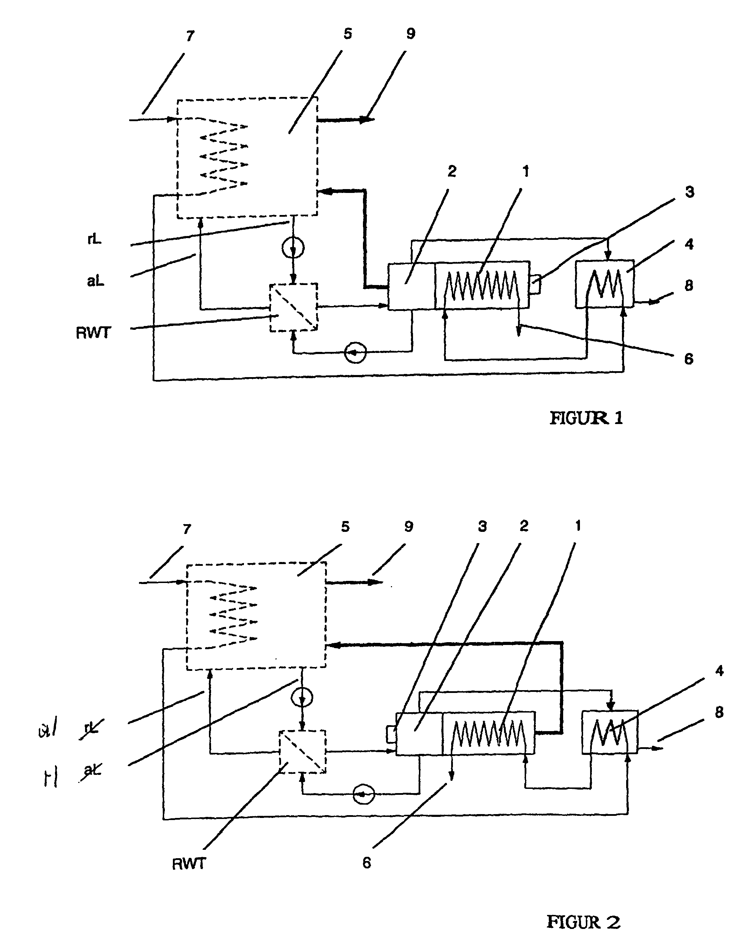

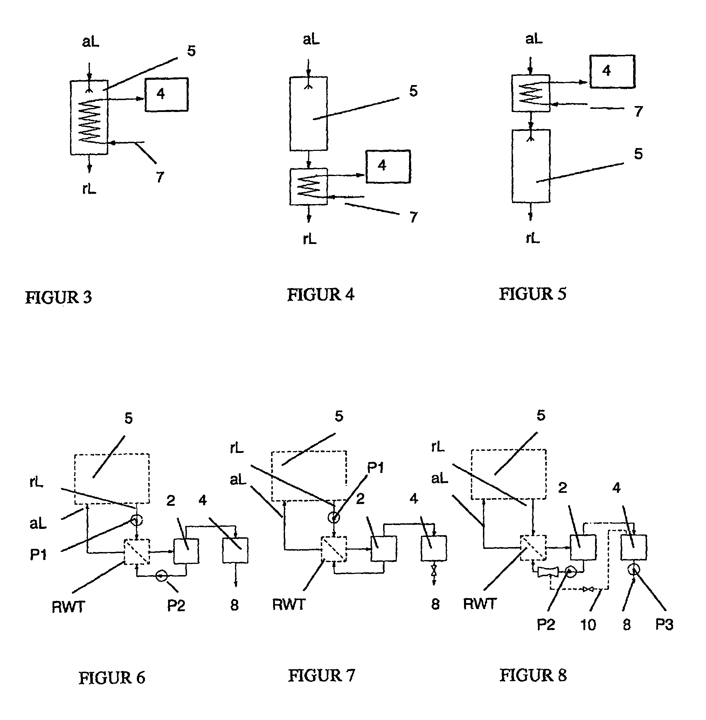

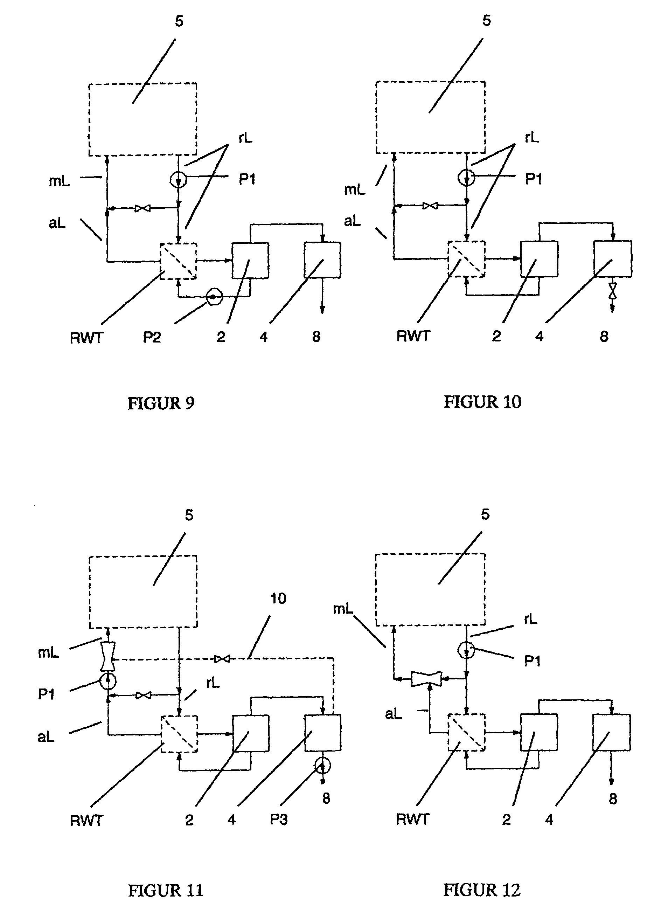

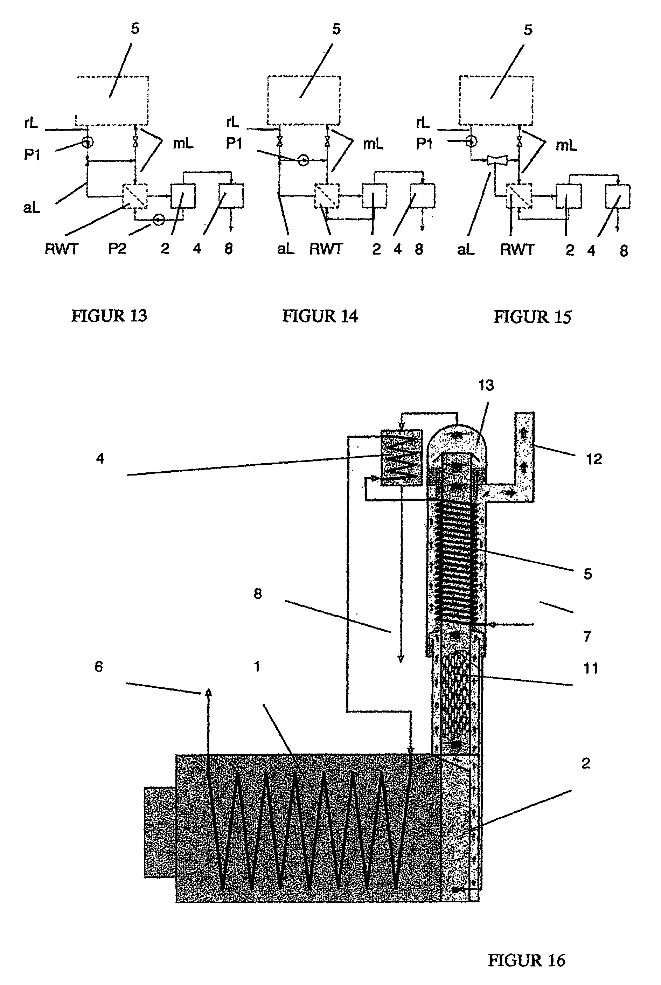

Figur 1 zeigt einen Kessel mit integriertem offenen Sorptionsprozeß mit Desorbernachschaltung. In Figur 2 ist ein Kessel mit integriertem offenen Sorptionsprozeß mit Desorbervorschschaltung. Die Figuren 3, 4 und 5 stellen Möglichkeiten der Wärmeauskopplung aus dem Absorber dar. In den Figuren 6, 7 und 8 sind Schaltungen mit einem Lösungskreislauf aufgezeigt während die Figuren 9, 10, 11, und 12 Bypaßschaltungen zeigen und die Figuren 13, 14 und 15 Darstellungen von Schaltungen mit zwei Lösungskreisläufen sind.

Schließlich ist in Figur 16 ein Kessel mit offenem Sorptionsprozeß aufgezeigt.

Die in den Zeichnungen verwendeten Bezugszeichen haben folgende Bedeutung:
- aL: arme Lösung,
- rL: reiche Lösung,
- mL: magere Lösung,
- RWT: Lösungswärmetauscher,
- P1, P2, P3: Pumpe,
- 1: Kessel, Heizkessel
- 2: Desorber,
- 3: Brenner,
- 4: Kondensator,
- 5: Absorber, Absorbereinheit
- 6: Vorlauf,
- 7: Rücklauf,
- 8: Kondensat,
- 9: Rauchgasaustritt,
- 10: Inertgasabsaugung,
- 11: Kapillarbündel,
- 12: Abgasaustritt,
- 13: Phasentrenner.

Um die Exergieverluste des Absorptionsprozesses zu minimieren empfiehlt sich die Zwischenschaltung eines regenerativen Lösungswärmetauschers RWT zwischen Absorber 5 und Desorber 2, in dem die aus dem Absorber 5 kommende an Wasser reiche Lösung rL durch die aus dem Desorber 2 kommende arme Lösung aL vorgewärmt wird.

Die unmittelbare Einbindung der Nutzwärmeauskopplung im Kessel 1 in den Absorptionsprozeß ermöglicht es, die Desorptionstemperatur dem Prozeß optimal anzupassen und somit die Temperaturniveaus der Wärmeabgabe und -aufnahme abzustimmen. Dies erfolgt einerseits durch die Wahl der Rauchgasaustrittstemperatur aus dem Kesselwärmetauscher und somit der Eintrittstemperatur des Rauchgases in den Desorber 2 (Figur 1). Desweiteren besteht die Möglichkeit, den Desorber 2 vor den Kesselwärmetauscher zu schalten (Figur 2).

Diese Variante ermöglicht eine bessere Anpassung der Wärmenutzung an den Temperaturverlauf der Wärmeabgabe. So wird der Desorber 2, welcher bei höheren Temperaturen arbeitet als der Kesselwärmetauscher (T_{Des} > T_{VL}), mit dem heißeren Rauchgas beheizt.

Die Realisierung des Prozesses ist nicht zwingend an die bauliche Integration des Desorbers 2 in den Kessel 1 gebunden.

Die Beheizung des Desorbers 2 kann ebenfalls extern durch die Verbrennungsabgase aus dem Kessel 1, durch einen gesonderten Wärmeträgerkreislauf bzw. Wärmerohre oder auch durch Dampf- bzw. Heißwasserauskopplung erfolgen.

Die Absorption kann sowohl unter stetiger Wärmeabgabe (Figur 3) als auch adiabat (Figur 4 bzw.5) erfolgen. Es ist von Vorteil bei einem adiabat arbeitenden Apparat die Wärme aus der armen Lösung aL auszukoppeln (Figur 5), da hier das geringste Temperaturniveau vorliegt und somit am besten der Rücklauftemperatur angepaßt ist.

Wird die Wärme aus der reichen Lösung rL ausgekoppelt (Figur 4), kann dieses bei einer höheren Temperatur erfolgen.

Der Sorptionsprozeß kann durch verschiedene Schaltungen realisiert werden.

In den Figuren 6, 7 und 8 ist der Grundprozeß dargestellt, in dem der Absorber 5 und der Desorber 2 in einen Lösungskreislauf eingebunden sind. Der Lösungstransport kann durch je eine Pumpe für den armen und den reichen Lösungsstrom realisiert werden (Figur 6). Der Vorteil dieser Variante besteht darin, daß der Desorber 2 und der Kondensator 4 auf Umgebungsdruckniveau betrieben werden können und die Pumpen nicht im Saugbetrieb arbeiten. Wird das Druckniveau im Desorber 2 bzw. im Kondensator 4 heraufgesetzt (Figur 7) oder herabgesetzt (Figur 8), ist es möglich, den Lösungsumlauf mit nur einer Pumpe P1 bzw. P2 zu realisieren. Die Absaugung von Inertgasen 10 aus dem im Unterdruck arbeitenden Kondensator 4 kann durch den Einsatz eines Strahlapparates erfolgen (Figur 8).

In den Figuren 9, 10, 11 und 12 ist der Sorptionsprozeß mit einer Bypaßschaltung dargestellt.

Diese Variante ermöglicht es, den Absorber 5 mit größeren Lösungsumläufen zu betreiben als den Desorber 2. Größere Lösungsumläufe im Absorber 5 gestatten eine kleinere Auslegung des Absorptionsapparates. Aufgrund eines geringen Lösungsumlaufes zum Desorber 2 und damit erhöhten Entgasungsbreiten ist es möglich, größere Wirkungsgrade durch geringere Wärmeübertragungsverluste im Lösungswärmetauscher RWT zu erzielen bzw. kleinere Wärmetauscher bei gleichem Wirkungsgrad einzusetzen.

Analog der in den Figuren 6, 7 und 8 dargestellten Schaltungen ist es auch hier möglich, durch Anheben oder Absenken des Druckniveaus im Desorber 2 und im Kondensator 4, den Lösungsumlauf mit nur einer Pumpe P1 zu realisieren (Figur 10 und 11).

Das sich bei Vakuumbetrieb im Kondensator ansammelnde Inertgas kann analog der in Figur 8 dargestellten Schaltung mit Hilfe eines Strahlapparates abgesaugt werden (Figur 11).

Die Bypaßschaltung ermöglicht es, durch den Einsatz eines Strahlapparates, den Lösungsumlauf mit nur einer im Druckbetrieb arbeitenden Pumpe P1 anzutreiben, ohne daß Desorber oder Kondensator im Unter- bzw. Überdruck arbeiten müssen (Figur 12).

Eine Schaltung mit zwei gekoppelten Lösungskreisläufen ist in den Figuren 13, 14 und 15 dargestellt. Hierbei sind Desorber- und Absorberkreislauf durch eine Mischstrecke miteinander gekoppelt. Wird zur Lösungsförderung eine im Saug- und Druckbetrieb arbeitende Pumpe P1 auf der Mischstrecke eingesetzt, so läßt sich in der Zweikreisschaltung der Lösungsumlauf mit nur einer Pumpe P1 realisieren (Figur 14).

Der Desorber 2 sowie der Kondensator 4 können bei dieser Variante unter Normaldruck betrieben werden.

Durch den Einsatz eines Strahlapparates ist es möglich, diese Schaltungsvariante mit einer Pumpe P1, welche nur im Druckbetrieb arbeitet, zu verwirklichen (Figur 15).

Ein Ausführungsbeispiel entsprechend der Schaltung nach Figur 6 wird in der Figur 16 gezeigt. Die Anordnung der Apparate und die Ausnutzung thermo-physikalischer Gesetzmäßigkeiten ermöglicht es, den Apparat ohne jegliche Zufuhr mechanischer Energie zu betreiben.

Der notwendige Förderdruck für den Lösungsstrom vom Absorber 5 in den Desorber 2 (rL) wird durch den hydrostatischen Höhenunterschied zwischen den beiden Apparaten aufgebracht. Dampf und arme Lösung aL werden mit Hilfe eines Kapillarbündels 11 in den Phasentrenner 13, welcher über dem Absorber 5 angeordnet ist, gefördert. Dort trennt sich der Dampf von der Lösung, die Lösung läuft in den Absorber 5 und der Dampf wird im Kondensator 4 kondensiert.

In den Kapillarrohren fördert der aufsteigende Wasserdampf die Lösung in Flüssigkeitspfropfen mit nach oben. Das Kapillarbündel 11 kann sowohl außerhalb der Apparate stehen als auch in kompakter Form in den Apparateaufbau integriert werden (Figur 16).

Durch die Gestaltung des Absorbers als Rieselapparat ist eine einfache Lösungsabtrennung am Abgasaustritt 12 möglich, da hierbei keine Versprayung der Lösung erfolgt.

Wird der Kondensator 4 im Unterdruck betrieben, was grundsätzlich bei allen Schaltungsvarianten außer denen nach Figur 7 und 10 möglich ist, so läßt sich die Inertgasabführung durch einen speziellen Kondensatabfluß in einfacher Weise realisieren. Das Kondensat 8 wird durch mehrere Kapillarrohre abgeführt, wobei bedingt durch das Leerlaufen des Kondensators 4 Gasblasen in den Kapillaren eingeschlossen werden und somit durch das ablaufende Kondensat 8 aus dem Kondensator 4 gefördert werden.

## Patentansprüche

1. Verfahren zum Betrieb eines Heizkessels mit Brennwertnutzung, **gekennzeichnet dadurch, dass** der Brennwert des Brennstoffes oberhalb der Taupunkttemperatur des Rauchgases mittels eines integrierten offenen, mit wäßrigen Lösungen aus Salzen oder Säuren betriebenen Kreislaufes genutzt wird, in dem die im Rauchgas enthaltene Feuchte zunächst von der Lösung absorbiert, in einem Desorber (2) wieder ausgetrieben und in einem Kondensator (4) niedergeschlagen wird.

2. Verfahren nach Anspruch 1, **gekennzeichnet dadurch, dass** die Wärmezufuhr zum Desorber (2) des Kreisprozesses direkt im Verbrennungsraum, vor oder nach den üblichen Heizflächen, durch einen speziellen Wärmeträger oder im Rauchgaszug des Kessels (1) erfolgt.

3. Verfahren nach Anspruch 1 und 2, **gekennzeichnet dadurch, dass** die Wärmezufuhr zum aufzuheizenden Heißwasserkreislauf zunächst in der Absorbereinheit (5), dann im Kondensator (4) und erst dann im Heizkessel (1) selbst erfolgt, wobei die Wärmeauskopplung aus der Absorbereinheit (5) im Absorber (5) selbst, aus der reichen Lösung nach dem Absorber (5) oder vorzugsweise aus der armen Lösung vor dem Absorber (5) erfolgt.

4. Verfahren nach den Ansprüchen 1 bis 3, **gekennzeichnet dadurch, dass** ein Zweiphasengemisch aus Lösung und Dampf durch den entstehenden Dampf aus dem Desorber (2) in einen Phasentrenner (13) gefördert wird, die nach der Phasentrennung verbleibende arme Lösung über einen Überlauf dem Absorber (5) zugeführt wird, und die reiche Lösung durch den hydrostatischen Druck aus dem Absorber (5) in den Desorber (2) zurückläuft.

5. Verfahren nach den Ansprüchen 1 bis 4, **gekennzeichnet dadurch, dass** der Transport der Lösung vorn Desorber (2) in den Phasentrenner (13) durch eine Vielzahl von Kapillaren erfolgt, in denen die Flüssigkeitspfropfen durch die Kapillarkräfte in den Kapillaren gehalten und durch den im Desorber (2) entstehenden Dampf in den Phasentrenner (13) geschoben werden und daß der Ablauf des Kondensats (8) aus dem Kondensator (4) in einem Kapillarbündel (11) erfolgt, in dem im Kondensator (4) angesammeltes Inertgas durch das entstehende Kondensat (8) in den Kapillaren eingeschlossen und mit dem Kondensat (8) gemeinsam unter Ausnutzung der hydrostatischen Höhe aus der Anlage gefördert wird.

6. Heizkessel mit Brennwertnutzung zur Realisierung des Verfahrens nach einem der vorgenannten Ansprüche, bei dem der Brennwert des Brennstoffes oberhalb der Taupunkttemperatur des Rauchgases mittels eines integrierten offenen, mit wässrigen Lösungen aus Salzen oder Säuren betriebenen Kreislaufes genutzt wird, wobei der Kreislauf aus einem Absorber (5), einem Desorber (2) und einem Kondensator (4) besteht, und die im Rauchgas enthaltene Feuchte zunächst von der Lösung im Absorber (5) absorbiert, im Desorber (2) wieder ausgetrieben und im Kondensator (4) niedergeschlagen wird.

7. Heizkessel nach Anspruch 6, **gekennzeichnet dadurch, dass** eine Bypaßverbindung zwischen der aus dem Absorber (5) kommenden wasserreichen Lösung (rL) und der aus dem Desorber (2) kommenden armen Lösung (aL) vorgesehen ist.

8. Heizkessel nach Ansprüchen 6 und 7, **gekennzeichnet dadurch, dass** der Lösungsumlauf durch den Betrieb von Desorber (2) und Verdampfer bei Unter- oder Überdruck mit nur einer Lösungspumpe realisiert ist.

9. Heizkessel nach den Ansprüchen 6 bis 8, **gekennzeichnet dadurch, dass** nach der Lösungspumpe ein Strahlapparat geschaltet ist, mit dem die Absaugung von im Kondensator (4) angesammelten Inertgasen erfolgt.

10. Heizkessel nach Anspruch 6, **gekennzeichnet dadurch, dass** Absorber (5) und Desorber (2) mit zwei Lösungskreisläufen betrieben werden, die durch eine Mischstrecke miteinander gekoppelt sind und daß der Lösungsumlauf durch Installation nur einer Lösungspumpe in der Mischstrecke realisierbar ist.

11. Heizkessel nach den Ansprüchen 6 bis 10, **gekennzeichnet durch** den Einsatz eines Strahlapparates zur Vermeidung des Saugbetriebes der Lösungspumpe.

## Claims

1. Method of operating a condensing boiler **characterized by** the principle that the gross calorific value of the fuel above the temperature of dew point of the flue gas is utilized by means of an integrated open circuit operated with hydrous solutions of salts or acids, in which the humidity contained in the flue gas first is absorbed by the solution, then expelled again in a desorber (2) and condensed in a condenser (4).

2. Method according to claim 1 **characterized by** the principle that the heat input to the desorber (2) of the cycling process is effected directly within the combustion chamber, before or behind the usual heating surfaces, by a special heat transfer medium or in the gas flue of the boiler (1).

3. Method according to claims 1 and 2 **characterized by** the principle that the heat input to the hot water cycle to be heated is realized first within the absorber unit (5), then in the condenser (4) and only after that in the boiler (1) itself, in which the heat is decoupled from the absorber unit (5) within the absorber (5) itself, from the rich solution behind the absorber (5) or preferably from the poor solution before the absorber (5).

4. Method according to claims 1 to 3 **characterized by** the principle that a two-phase mixture of solution and steam is delivered by the produced steam from the desorber (2) to a phase separator (13), the poor solution remaining after the phase separation is supplied to the absorber (5) via an overflow, and the rich solution flows back from the absorber (5) to the desorber (2) due to the hydrostatic pressure.

5. Method according to claims 1 to 4 **characterized by** the principle that the solution is transported from the desorber (2) to the phase separator (13) passing through a multitude of capillaries in which the liquid grafts are retained in the capillaries by the capillary forces and pushed into the phase separator (13) by the steam produced in the desorber (2), and that the condensate (8) drains off the condenser (4) in a capillary bundle (11) in which the inert gas accumulated in the condenser (4) is occluded in the capillaries by the condensate (8) produced and is brought out of the plant together with the condensate (8) utilizing the hydrostatic height.

6. Condensing boiler to realize the method according to one of the aforementioned claims, in which the gross calorific value of the fuel above the temperature of dew point of the flue gas is utilized by means of an integrated open circuit operated with hydrous solutions of salts or acids, the circuit being composed of an absorber (5), a desorber (2), and a condenser (4), and in which the humidity contained in the flue gas first is absorbed by the solution in the absorber (5), then expelled again in the desorber (2) and condensed in the condenser (4).

7. Boiler according to claim 6, **characterized by** the principle that a by-pass connection is provided for between the water-rich solution (rL) coming from the absorber (5) and the poor solution (aL) coming from the desorber.

8. Condensing boiler according to claims 6 and 7, **characterized by** the principle that only one solution pump is used for the circulation of the solution, due to the operation of the desorber (2) and evaporator with low or overpressure.

9. Condensing boiler according to claims 6 to 8, **characterized by** the principle that a jet apparatus is installed following the solution pump to suck off the inert gases accumulated in the condenser (4).

10. Condensing boiler according to claim 6, **characterized by** the principle that the absorber (5) and the desorber (2) are operated with two solution circuits joined together by a mixing section, and that the circulation of the solution can be realized by installing only one solution pump in the mixing section.

11. Condensing boiler according to claims 6 to 10, **characterized by** the use of a jet apparatus to avoid the suction mode operation of the solution pump.

## Revendications

1. Procédure de fonctionnement d'une chaudière à condensation, **caractérisée en ce que** le pouvoir calorifique du combustible au-dessus de la température du point de rosée du gaz de fumée est utilisé au moyen d'un circuit intégré ouvert, fonctionnant avec des solutions aqueuses de sels ou d'acides, par le fait que l'humidité contenue dans le gaz de fumée est tout d'abord absorbée par la solution, ensuite chassée de nouveau dans un générateur (2) et précipitée dans un condenseur (4).

2. Procédure selon la revendication 1, **caractérisée en ce que** l'apport de chaleur vers le générateur (2) du processus de cycle s'effectue directement dans la chambre de combustion en amont ou en aval des surfaces de chauffe usuelles, par un agent caloporteur spécial ou dans l'évent des gaz de fumée de la chaudière (1).

3. Procédure selon les revendications 1 et 2, **caractérisée en ce que** l'apport de chaleur vers le circuit d'eau chaude à chauffer s'effectue tout d'abord dans l'unité absorbante (5), puis dans le condenseur (4) est seulement après cela dans la chaudière (1) même, le découplage de la chaleur de l'unité absorbante (5) étant effectué dans l'absorbeur (5) même, à partir de la solution riche en aval de l'absorbeur (5) ou, de préférence, de la solution pauvre en amont de l'absorbeur (5).

4. Procédure selon les revendications 1 à 3, **caractérisée en ce qu'**un mélange biphasé de solution et de vapeur est refoulé par la vapeur produite à partir du générateur (2) dans un diviseur de phases (13), la solution pauvre restante après la séparation des phases est amenée par un trop-plein vers l'absorbeur (5) et la solution riche reflue grâce à la pression hydrostatique de l'absorbeur (5) dans le générateur.

5. Procédure selon les revendications 1 à 4, **caractérisée en ce que** le transport de la solution du générateur (2) dans le diviseur de phases (13) s'effectue au travers d'une pluralité de capillaires, dans lesquels les gouttes de liquidité sont maintenues dans les capillaires par les forces capillaires et poussées dans le diviseur de phases (13) par la vapeur produite dans le générateur (2) et **en ce que** l'écoulement du condensat (8) du condenseur (4) s'effectue dans un faisceau capillaire (11) en enfermant du gaz inerte accumulé dans le condenseur (4) dans les capillaires par le condensat (8) qui se produit et en le refoulant en commun avec le condensat (8) en utilisant la hauteur hydrostatique vers le dehors de l'installation.

6. Chaudière à condensation pour réaliser la procédure selon l'une quelconque des revendications précédentes, procédure dans laquelle le pouvoir calorifique du combustible au-dessus de la température du point de rosée du gaz de fumée est utilisé au moyen d'un circuit intégré ouvert, fonctionnant avec des solutions aqueuses de sels ou d'acides, ledit circuit étant composé d'un absorbeur (5), d'un générateur (2) et d'un condenseur (4), et l'humidité contenue dans le gaz de fumée étant tout d'abord absorbée par la solution dans l'absorbeur (5), chassée de nouveau dans le générateur (2) et précipitée dans le condenseur (4).

7. Chaudière selon la revendication 6, **caractérisée en ce qu'**un raccord de by-pass est prévu entre la solution riche en eau (rL) en provenance de l'absorbeur (5) et la solution pauvre (aL) en provenance du générateur (2).

8. Chaudière selon les revendications 6 et 7, **caractérisée en ce que** la circulation de solution est réalisée par le fonctionnement du générateur (2) et de l'évaporateur en sous-pression ou surpression avec une seule pompe de solution.

9. Chaudière selon les revendications 6 à 8, **caractérisée en ce qu'**un appareil à jet est connecté en aval de la pompe de solution, appareil à jet au moyen duquel s'effectue l'aspiration des gaz inertes accumulés dans le condenseur (4).

10. Chaudière selon la revendication 6, **caractérisée en ce que** l'absorbeur (5) et le générateur (2) fonctionnent avec deux circuits de solutions lesquels sont couplés l'un à l'autre par une section de mélange et **en ce que** la circulation de solution est réalisable par l'installation d'une seule pompe de solution dans la section de mélange.

11. Chaudière selon les revendications 6 à 10, **caractérisée par** l'emploi d'un appareil à jet afin d'éviter le régime d'aspiration de la pompe de solution.
